## Europäisches Patentamt

## European Patent Office

## Office européen des brevets

(11) Veröffentlichungsnummer: **0 296 402 B1**

(12)

# EUROPÄISCHE PATENTSCHRIFT

(45) Veröffentlichungstag der Patentschrift:
19.09.90

(21) Anmeldenummer: 88109078.1

(22) Anmeldetag: 08.06.88

(51) Int. Cl.⁵: **C08F 285/00**, C08L 51/04, C08G 77/42

(54) Thermoplastische Siliconkautschukpfropfpolymerisate (I).

(30) Priorität: 20.06.87 DE 3720476

(43) Veröffentlichungstag der Anmeldung:
28.12.88 Patentblatt 88/52

(45) Bekanntmachung des Hinweises auf die Patenterteilung:
19.09.90 Patentblatt 90/38

(84) Benannte Vertragsstaaten:
DE FR GB IT

(56) Entgegenhaltungen:
EP-A- 0 217 257
EP-A- 0 222 127
EP-A- 0 246 537

(73) Patentinhaber: BAYER AG,
D-5090 Leverkusen 1 Bayerwerk(DE)

(72) Erfinder: Lindner, Christian, Dr., Riehler Strasse 200,
D-5000 Köln 60(DE)
Erfinder: Eichenauer, Herbert, Dr., Goethestrasse 71,
D-4047 Dormagen(DE)
Erfinder: Wittmann, Dieter, Dr., Doerperhofstrasse 15,
D-4150 Krefeld(DE)
Erfinder: Damrath, Volker, Dr., Dierath 26,
D-5093 Burscheid(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Pfropfpolymerisate auf spezielle Siliconkautschuke und ihre Verwendung als thermoplastische Formmasse.

Pfropfpolymerisate auf Siliconkautschuke sind grundsätzlich bekannt (vgl. DE-OS 2 539 572 und DE-OS 2 421 288).

Es wurde gefunden, daß Pfropfpolymerisate mit Siliconkautschuken als Pfropfgrundlage besonders vorteilhafte thermoplastische Formmassen darstellen, wenn die Pfropfgrundlage eine Kern/Mantel-Struktur aufweist, wobei der Kern ein harzartiges Polymerisat sein kann. Gegenstand der Erfindung sind somit thermoplastische teilchenförmige Pfropfpolymerisate mit Teilchen aus einem Kern (A) aus organischem, harzartigem Polymerisat mit Erweichungstemperaturen (Glastemperaturen) über 30°C aus olefinisch ungesättigten Monomeren, einem Hüllenpolymerisat (B) aus Organopolysiloxan und einem auf die aus A und B bestehenden Teilchen gepfropften Polymerisat (C) (Pfropfauflage) aus wenigstens einem α,β-ungesättigten olefinischen Monomeren.

Das Gewichtsverhältnis des Kerns (A) zu der Hülle (B) kann 0,1 zu 99,9 bis 90 zu 10, sein, bevorzugt 10 zu 90 bis 50 zu 50. Die erfindungsgemäßen mehrphasigen Pfropfpolymerisate haben mittlere Teilchendurchmesser ($d_{50}$) von 0,05 bis 10 μm, bevorzugt 0,1 bis 2 μm, besonders bevorzugt 0,1 bis 1 μm.

Bevorzugte Pfropfpolymerisate enthalten die Pfropfauflage (C) in Mengen von 20 bis 90, insbesondere 30 bis 80, vorzugsweise 45 bis 75 Gew.-%, bezogen auf das gesamte Pfropfpolymerisat.

Die Kerne (A) aus organischem, harzartigem Polymerisat mit Erweichungstemperaturen (Glastemperaturen) über 30°C, (bevorzugt über 60°C, und besonders über 90°C) besitzen selbst mittlere Teilchengrößen ($d_{50}$) im Bereich von 0,05 bis 2 μm, insbesondere im Bereich von 0,09 bis 0,5 μm. Sie können unvernetzt, teilvernetzt oder hochvernetzt sein, bevorzugt sind Teilchen aus unvernetztem Polymerisat. Das Kernmaterial (A) stellt ein harzartiges Homo- oder Interpolymerisat aus wenigstens einem olefinisch ungesättigten polymerisierbaren Monomeren dar, insbesondere aus α-Methylstyrol, Acrylnitril, Methacrylnitril, Alkylmethacrylat, Maleinsäureimid, Vinylester von $C_1$-$C_6$-Carbonsäuren, Olefin, insbesondere Ethylen, Vinylchlorid, Vinylidenchlorid, Acrylsäure, Methacrylsäure, Acrylamid oder Mischungen daraus.

Falls gewünscht, können die Polymerisate auch zusätzlich geringere Mengen (bis zu 10 Gew.-%) Butadien, Isopren, Alkylacrylat, Maleinsäureester eingebaut enthalten. Bevorzugte Kernmaterialien sind Copolymerisate auf der Basis von Styrol und/oder α-Methylstyrol mit Methylmethacrylat und/oder Acrylnitril, insbesondere Styrol-Acrylnitril-Copolymerisate, α-Methylstyrol-Acrylnitril-Copolymerisate, Styrol-Methylmethacrylat-Copolymerisate sowie Polymethylmethacrylat.

Das Material der Hülle (B) ist ein mindestens teilvernetztes Homo- oder Interpolymerisat von Organosiloxanen, im wesentlichen aus Einheiten der allgemeinen Formel

$$R_n SiO_{\frac{4-n}{2}} \qquad (I)$$

worin R einen organischen Rest und n eine Zahl mit einem Durchschnittswert von 1 bis weniger als 3 bedeuten.

R kann z.B. ein einwertiger gesättigter Kohlenwasserstoffrest mit 1 bis 18 C-Atomen sein, wie Methyl, Ethyl, Phenyl oder ein anderer einwertiger gegebenenfalls substituierter Kohlenwasserstoffrest, der unter dem Einfluß von Reaktionsbildnern reaktionsfähig ist, insbesondere Vinyl, Allyl, Chloralkyl, Mercaptoalkyl, Acryloxypropyl. Bevorzugt sind mindestens 80 % aller Reste R Methylgruppen.

Die in den erfindungsgemäßen Pfropfpolymerisaten enthaltenden Pfropfauflagen (C) sind Polymerisate von α,β-ungesättigten, polymerisierbaren Monomeren, vorzugsweise von Vinylmonomeren. Geeignete Monomere sind z.B. Styrol, α-Methylstyrol, p-Methylstyrol, Halogenstyrol, Acrylnitril, Methacrylnitril, Vinylhalogenid, Maleinimide, Maleinsäurederivate, Vinylacetat, Vinylpropionat, (Meth)acrylsäurealkylester (mit bis zu 10 C-Atomen im Alkoholteil), Vinylether, konjugierte Diene, wie Butadien, Chloropren; besonders bevorzugt sind Styrol, Acrylnitril und α-Olefine (z.B. Propen, Ethylen, Buten).

Die Pfropfauflagen (C) können Homopolymerisate oder bevorzugt Co-Polymerisate aus wenigstens zwei der genannten Monomeren z.B. Styrol und Acrylnitril, darstellen.

Diese Polymerisate (C) sind wenigstens teilweise auf den Siliconkautschuk aufgepfropft, d.h. chemisch mit ihm verbunden. In besonders bevorzugten Pfropfpolymerisaten ist mehr als 40 Gew.-% der Pfropfauflage tatsächlich aufgepfropft.

Die erfindungsgemäßen Pfropfpolymerisate können wie folgt hergestellt werden:

In der ersten Stufe wird eine Emulsion des Kernmaterials (A) hergestellt durch an sich bekannte Dispersionspolymerisation eines oder mehrerer Monomeren, insbesondere durch Emulsionspolymerisation in wäßrigem Medium mit radikalischen Initiatoren in Gegenwart von Emulgatoren. Durch die Wahl der Polymerisationsbedingungen lassen sich die Durchmesser der Polymerisatteilchen in der Emulsion einstellen. Man polymerisiert normalerweise bei 30 bis 100°C. Bevorzugte Emulsionen des Kern-Polymerisats A besitzen einen pH-Wert kleiner 7 und werden mit anionischen Emulgatoren, insbesondere Salzen von Sulfonsäuren oder organischen Sulfaten hergestellt. Das verwendete Verhältnis von Monomer, Emulgator und Wasser bestimmt die Teilchendurchmesser der Polymerisate in den so erhaltenen Latices. Um teilweise oder vollständig vernetztes Kern-Material A zu erhalten, können die Monomeren zusammen mit wenigstens einem polyfunktionellen Vinyl- oder Allylmonomeren polymerisiert werden, insbesondere in Mengen von bis zu 5 Gew.-% bezogen auf die Monomeren. Vernetzende polyfunktionelle Monomere sind bekannt, bevorzugt sind Divinylbenzol, Bis-acrylate, Bis-acrylamide, Acrylsäurevinylester, Triallylcyanurat, -isocyanurat, -phosphat, -citrat.

In der zweiten Stufe wird in Gegenwart der Emulsion des Polymerisats der ersten Stufe das die Hülle (B) bildende Organopolysiloxan durch Emulsionspolymerisation hergestellt, indem man niedermolekulare Organosiloxane in dem Latex aus der ersten Stufe dispergiert und (gegebenenfalls in Gegenwart einer für eine stabile Emulsion nötigen Menge Emulgator sowie eines Katalysators) polymerisiert. Dabei muß vor der Polymerisation des grob dispergierte Organosiloxan nicht mechanisch, z.B. in schnellaufenden Rührwerken, Kolloidmühlen oder Hochdruckhomogenisatoren emulgiert werden. Vielmehr ist bevorzugt, gleichzeitig zu emulgieren und zu polymerisieren. Dadurch wird überraschenderweise erreicht, daß das sich bildende Organopolysiloxan auf das in der ersten Stufe hergestellte Kernmaterial (A) aufpolymerisiert. In der Regel wird bei 40 bis 100°C polymerisiert.

Die Teilchendurchmesser auch dieser Kern-Mantel-Polymerisate lassen sich durch die Wahl der Polymerisationsbedingungen einstellen, z.B. durch Verwendung nichtionischer Coemulgatoren, das Verhältnis von Emulgator zu Organosiloxan sowie durch die Wahl von Kernmaterialien mit geeigneten Teilchendurchmessern.

Siliciumorganische Monomere und Oligomere zur Herstellung von (B) sind bekannt. Geeignet sind u.a. cyclische Organosiloxanoligomere, z.B. Octamethylcyclotetrasiloxan und Decamethylcyclopentasiloxan. Daneben sind Alkoxysilane und Alkoxysiloxane mit 1 bis 4 Kohlenstoffatomen geeignet, die in der Alkoxygruppe enthalten sind. Beispiele sind Methyltriethoxysilan, 3-Aminopropyltrimethoxysilan und 3-Mercaptopropylmethyldimethoxysilan. Geeignet sind ferner Polysiloxanole, insbesondere α-ω-Polysiloxandiole mit Molekulargewichten von etwa 2000 bis 5000 und einer Viskosität von 50 bis 150 mPa.s bei 25°C.

Das Organopolysiloxan der Hülle (B) kann teilweise vernetzt sein. Verzweigungen oder Vernetzungen können ein gebaut werden durch Mitverwendung von z.B. Tetraethoxysilan oder eines Silans der allgemeinen Formel

$RSiX_3(II)$,

wobei X eine hydrolysierbare Gruppe, insbesondere den Alkoxyrest darstellt und R die oben angegebene Bedeutung hat. Bevorzugt ist R = Methyl und Phenyl. Eine Vernetzung kann jedoch auch stattfinden, wenn z.B. gleichzeitig eingesetzte Vinyl- und Mercaptogruppen bei der Emulsionspolymerisation der Siloxanbestandteile miteinander reagieren; dann ist die Zugabe eines externe Vernetzers nicht erforderlich.

Als Emulgatoren werden bekannte nichtionogene und/oder anionenaktive Emulgatoren verwendet.

Beispiele für nichtionogene Emulgatoren sind Anlagerungsprodukte von Ethylenoxid an Verbindungen mit acidem Wasserstoff, wie Fettalkohole und Fettsäuren. Der HLB-Wert der Emulgatoren soll in dem die Bildung von O/W-Emulsionen begünstigendem Bereich liegen, im allgemeinen ≥ 10. Geeignete nichtionogene Emulgatoren sind z.B. POE (3)-Laurylalkohol, POS (20)-Oleylalkohol, POE (7)-Nonylphenol und POE (10)-Stearat. (Die Schreibweise POE (3)-Laurylalkohol bedeutet, daß an ein Molekül Laurylalkohol 3 Einheiten Ethylenoxid angelagert sind, wobei die Zahl 3 einen Mittelwert darstellt, die übrigen Angaben sind analog zu verstehen).

Als anionenaktive Emulgatoren können die Alkalisalze von Fettsäuren oder die Alkali-, Erdalkalioder Aminsalze von organischen Sulfonsäuren, insbesondere Alkylarylsulfonsäuren, verwendet werden. Beispiele hierfür sind die Natriumsalze der Dodecylbenzolsulfonsäure und der Laurylsulfonsäure. Es ist möglich, Mischungen von nichtionogenen Emulgatoren mit anionenaktiven Emulgatoren zu verwenden.

Als Katalysatoren werden Säuren, bevorzugt grenzflächenaktive, verwendet. Beispiele sind Sulfonsäuren wie Alkyl sulfonsäuren und Alkylarylsulfonsäuren, speziell Dodecylbenzolsulfonsäure.

Bei der Polymerisation der Hülle (B) auf den Kern (A) muß die Bildung neuer Teilchen möglichst vollständig verhindert werden. Der Emulgator darf daher nur in einer zur Oberflächenbedeckung der Teilchen gerade ausreichenden Menge vorhanden sein. Verwendet man zur Bildung des Kerns (A) einen agglomerierten Latex, um ein Pfropfpolymerisat mit großen Teilchen zu erhalten, so kann dieses ungepfropfte Harz-Partikel enthalten. Man kann die Polymerisation der Hülle (B) auch so führen, daß neben Partikeln mit Kern-Mantel-Struktur gleichzeitig Partikel aus reinem Organopolysiloxan erzeugt werden. Mischungen beider Art können unter besonderen Umständen Verwendung finden.

In der dritten Stufe des Herstellungsverfahrens werden die die Pfropfauflage bildenden Monomeren in Anwesenheit des Pfropfpolymerisats der zweiten Stufe radikalisch polymerisiert, insbesondere bei 40 bis 90°C, wobei sich eine zweite Pfropfhülle ausbildet. Diese Pfropfpolymerisation kann in Suspension, Dispersion oder bevorzugt in Emulsion durchgeführt werden. Man kann diskontinuierlich oder kontinuierlich polymerisieren. Man initiiert mit Radikalbildnern (wie Peroxiden, Azoverbindungen, Hydroperoxiden, Persulfaten, Perphosphaten) und verwendet gegebenenfalls anionische Emulgatoren wie Carboniumsalze, Sulfonsäuresalze oder organische Sulfate. Dabei bilden sich die Pfropfpolymerisate mit hohen Pfropfausbeuten, d.h. ein großer Teil des sich bildenden Polymerisats (C) wird mit dem Siliconkautschuk chemisch verbunden. Das Pfropfpolymerisat der zweiten Stufe (A+B) macht besondere Verfahrensmaßnahmen für hohe Pfropfausbeute überflüssig.

Die so hergestellten Pfropfpolymerisate der dritten Verfahrensstufe können nach bekannten Methoden aufgearbeitet werden, z.B. durch Koagulation der Latices mit Elektrolyten (Salze, Säuren oder Gemische davon) und anschließende Reinigung und Trocknung.

Diese erfindungsgemäßen Pfropfpolymerisate besitzen überraschend gute Eigenschaften als Thermoplast z.B. Alterungsstabilität, Thermostabilität, besonders während der Verarbeitung zu Formkörpern, Oberflächenbeschaffenheit daraus hergestellter Formkörper, Verarbeitbarkeit, Tieftemperaturzähigkeit und Bruchfestigkeit.

Das erfindungsgemäße Pfropfpolymerisat kann direkt als thermoplastische Formmasse verwendet werden, wenn sein Kautschukgehalt (d.h. Pfropfpolymerisat aus A und B) nicht größer als 40 Gew.-% ist. Bei größeren Kautschukgehalten kann ein starres Harz zugemischt werden. Starre Harze sind vorzugsweise Styrol/Methylmethacrylat/Acrylnitril-Terpolymerisate, Styrol- bzw. α-Methylstyrol/-Acrylnitril-Copolymerisate, Styrol/Acrylnitril/Acrylester-Terpolymerisate, Methylmethacrylat-Homo- bzw. Copolymerisate, Styrol/Maleinsäureanhydrid-Copolymerisate, Styrol/Methylmethacrylat/Maleinsäureanhydrid-Terpolymerisate oder Mischungen solcher Harze.

Man kann die erfindungsgemäßen Pfropfpolymerisate auch mit bekannten Kautschuk-modifizierten Kunststoffen vermischen, z.B. ABS-Kunststoffen oder mit Acrylatkautschuk-modifizierten Harzen ("ASA-Harzen"). Man kann so die Alterungsbeständigkeit und elektrostatischen Eigenschaften von ABS-Kunststoffen ohne Beeinträchtigung der mechanischen Eigenschaften verbessern oder die mechanischen Eigenschaften von ABS-Harzen und die Oberflächenbeschaffenheit von Formkörpern daraus.

Die erfindungsgemäßen Pfropfpolymerisate der Formmassen können Farbstoffe und Pigmente. Stabilisatoren gegen Licht- und Wärmeeinwirkung, Weichmacher, Schaummittel und organische oder anorganische Füllstoffe in Körnchen-, Pulver- oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

Beispiele

1. Herstellung eines Kernmaterials (A)

1.1 In einem Reaktor werden 3000 Gew.-Teile Wasser und 7,5 Gew.-Teile Na-Salz von C₁₄-C₁₈-Alkylsulfonsäuren vorgelegt. Nach Aufheizen unter Rühren auf 63 bis 65°C werden 240 Gew.-Teile einer Mischung aus 28 Gew.-% Acrylnitril und 72 Gew.-% Styrol in den Reaktor eingespeist. Nach Initiierung mit einer Lösung von 15 Gew.-Teilen Kaliumperoxodisulfat in 150 Gew.-Teilen Wasser werden innerhalb von 4 Stunden folgende Lösungen in den Reaktor eingespeist:

Lösung 1:
788 Gew.-Teile Acrylnitril
2025 Gew.-Teile Styrol
12 Gew.-Teile tert.-Dodecylmercaptan

Lösung 2:
2100 Gew.-Teile Wasser
33 Gew.-Teile Na-Salz von C₁₄-C₁₈-Alkylsulfonsäuren
Danach wird bei 65°C auspolymerisiert, bis der Latex einen Feststoffgehalt größer 36,5 Gew.-% aufweist. Der resultierende Latex besitzt einen pH-Wert von 3,57 und einen mittleren Teilchendurchmesser (d₅₀-Wert) von 0,12 μm.

2. Herstellung von Kautschukteilchen (A+B)

2.1 In einem Reaktor werden unter Stickstoffatmosphäre vorgelegt:
150 Gew.-Teile der Harzemulsion (1.1)
5,0 Gew.-Teile Octamethylcyclotetrasiloxan
Die Reaktionsmischung wird auf 85°C erwärmt und 2 Stunden gerührt.
Nach Zugabe einer Lösung von 1,4 Gew.-Teilen Dodecylbenzolsulfonsäure, 1,4 Gew.-Teilen POE (5)-Laurylalkohol und 1,4 Gew.-Teilen C₁₂-C₁₄-Alkylsulfonsäure-Natriumsalz in 58 Gew.-Teilen Wasser wird eine Stunde bei 80°C nachgerührt. Anschließend wird eine Mischung aus 95 Gew.-Teilen Octamethylcyclotetrasiloxan, 2,5 Gew.-Teilen Mercaptopropylmethyldimethoxysilan und 3,1 Gew.-Teilen Tetramethyltetravinylcyclotetrasiloxan innerhalb von 2 Stunden eindosiert, die Polymerisation wird innerhalb 23 Stunden bei 80°C zu Ende geführt und die gebildete stabile Emulsion auf Zimmertemperatur abgekühlt. Sie enthält das Mehrphasenpolymerisat in einer Konzentration von 48,7 Gew.-. Der mittlere Teilchendurchmesser beträgt 0,18 μm. Das Polymerisat ist teilvernetzt, der Gelgehalt beträgt 58,2 %. Es besteht aus 35 Gew.-% Styrol-Acrylnitril-Copolymer und 65 Gew.-% Organosiloxan.

3. Erfindungsgemäßes Pfropfpolymerisat (A+B+C)

3.1 In einem Reaktor werden vorgelegt:
1540 Gew.-Teile Latex 2.1
1640 Gew.-Teile Wasser
Nach Initiierung mit einer Lösung von 7,5 Gew.-Teilen Kaliumperoxodisulfat in 195 Gew.-Teilen Wasser bei 65°C werden folgende Lösungen in den Reaktor innerhalb von 4 Stunden gleichmäßig eingespeist:

Lösung 1:
540 Gew.-Teile Styrol
210 Gew.-Teile Acrylnitril

Lösung 2:
375 Gew.-Teile Wasser
15 Gew.-Teile Natriumsalz von $C_{14}$-$C_{18}$-Alkylsulfonsäuren.

Anschließend wird innerhalb von 4 Stunden bei 65°C auspolymerisiert. Der Monomerumsatz beträgt mehr als 98 Gew.-%. Es resultiert ein Latex mit einem Feststoffgehalt von ca. 33 Gew.-%. Nach Koagulation mit einer wäßrigen Magnesiumsulfat-Lösung, Filtration und Trocknung im Vakuum wird das Pfropfpolymerisat in Form eines weißen Pulvers erhalten.

4. Vergleich

4.1 Herstellung einer Siliconemulsion

38,4 Gew.-Teile Octamethylcyclotetrasiloxan, 1,2 Gew.-Teile Tetramethyltetravinylcyclotetrasiloxan und 1 Gew.-Teil γ-Mercaptopropylmethyldimethoxysilan werden miteinander verrührt. 0,5 Gew.-Teilen Dodecylbenzolsulfonsäure werden anschließend 58,4 Gew.-Teilen Wasser innerhalb 1 Stunde zugegeben. Dabei wird intensiv gerührt. Die Voremulsion wird mit Hilfe einer Hochdruckemulgiermaschine zweimal bei 200 bar homogenisiert. Man gibt weitere 0,5 Gew.-Teile Dodecylbenzolsulfonsäure hinzu.
Die Emulsion wird 2 Stunden bei 85°C und anschließend 36 Stunden bei Zimmertemperatur gerührt. Neutralisiert wird mit Hilfe von 5 n-NaOH. Es resultiert eine stabile Emulsion mit einem Feststoffgehalt von ca. 36 Gew.-%. Das Polymerisat besitzt einen Gelgehalt von 82 Gew.-%, gemessen in Toluol, der mittlere Teilchendurchmesser ($d_{50}$ beträgt 300 nm.

4.2 Pfropfpolymerisat

In einem Reaktor werden vorgelegt:
2107 Gew.-Teile Latex 4.1
1073 Gew.-Teile Wasser.
Nach Initiierung mittels einer Lösung von 7,5 Gew.-Teilen Kaliumperoxidisulfat in 195 Gew.-Teilen Wasser bei 65°C werden folgende Lösungen in den Reaktor innerhalb von 4 Stunden gleichmäßig zudosiert:

Lösung 1:
540 Gew.-Teile Styrol
210 Gew.-Teile Acrylnitril

Lösung 2:
375 Gew.-Teile Wasser
15 Gew.-Teile Na-Salz von $C_{14}$-$C_{18}$-Alkylsulfonsäuren

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumsulfat-Lösung, Filtration und Trocknung wird das Pfropfpolymerisat in Form eines weißen Pulvers erhalten.

5. Eigenschaften des Thermoplasten

Die in der Tabelle 1 angegebenen Formmassen werden hergestellt durch Compoundierung auf einem Banbury-Mischer BR (Pomini-Farrel) unter folgenden Mischbedingungen:
Massetemperatur:190 bis 225°C
Mischzeiten:1,5 bis 2 Minuten
Cycluszeiten:2 bis 4 Minuten.
Das Mischgut fällt aus dem Banbury-Mischer auf einen Zweiwalzenstuhl (Walze 1 T = 160°C, Walze 2 T = 150°C), wird in Form eines Bandes abgenommen und nach Abkühlung granuliert.
Aus dem Granulat werden durch Spritzguß bei 240°C Normkleinstäbe hergestellt und diese nach DIN-Methoden untersucht.
Als Vergleichssubstanz wird ein ABS-Pfropfpolymerisat V aus 50 Gew.-% grobteiligem hochvernetztem Polybutadien und 50 Gew.-% "SAN"-Polymerisat mit einem Styrol/Acrylnitril-Gew.-Verhältnis von 72:28 mit einem mittleren Teilchendurchmesser ($d_{50}$) von 400 nm eingesetzt.
Die Kerbschlagzähigkeit wurde bei Raumtemperatur ($a_k$ $^{RT}$) und bei -40°C ($a_K$ $^{-40°C}$) nach DIN 53 (Einheiten: kJ/m$^2$) gemessen, die Kugeldruckhärte ($H_c$) nach DIN 53456 (Einheiten: N/mm$^2$) und die Wärmeformbeständigkeit (Vicat B) nach DIN 53460 (Einheiten: °C) bestimmt.

## Tabelle 1

| Beispiel | Pfropfpolymer | (Gew.-Teile) | Harz | (Gew.-Teile) | Gleitmittel |
|----------|---------------|--------------|------|--------------|-------------|
| 5.1 | 3.1 | (20) | SAN | (80) | 2 PETS |
| 5.2 | 3.1 | (30) | SAN | (70) | 2 PETS |
| 5.3 | 3.1 | (40) | SAN | (60) | 2 PETS |
| 5.4 | 3.1 | (50) | SAN | (50) | 2 PETS |
| 5.5 | 4.2 | (20) | SAN | (80) | 2 PETS |
| 5.6 | 4.2 | (30) | SAN | (70) | 2 PETS |
| 5.7 | 4.2 | (40) | SAN | (60) | 2 PETS |
| 5.8 | 4.2 | (50) | SAN | (50) | 2 PETS |
| 5.9 | V | (30) | SAN | (70) | 2 PETS |
| 5.10 | V | (40) | SAN | (60) | 2 PETS |
| 5.11 | V | (50) | SAN | (50) | 2 PETS |

SAN = Copolymer aus 70 Gew.-% Styrol und 30 Gew.-% Acrylnitril und einer Grenzviskosität von [η] = 0,72 dl/g (gemessen in Dimethylformamid bi 20°C)

PETS = Pentaerythrittetrastearat

**Tabelle 2** Eigenschaften der Formmassen aus Tabelle 1

| Produkt | $a_k^{RT}$ | $a_k^{-40°C}$ | Hc | Vicat B |
|---|---|---|---|---|
| 5.1 | 10,0 | 4,0 | 125 | 104 |
| 5.2 | 17,9 | 7,9 | 109 | 101 |
| 5.3 | 20,5 | 11,5 | 100 | 99 |
| 5.4 | 22,0 | 13,6 | 78 | 98 |
| 5.5 | 11,2 | 4,0 | 123 | 102 |
| 5.6 | 16,6 | 8,2 | 103 | 100 |
| 5.7 | 18,4 | 10,9 | 97 | 99 |
| 5.8 | 19,9 | 12,9 | 69 | 93 |
| 5.9 | 14,4 | 7,2 | 108 | 99 |
| 5.10 | 14,9 | 11,2 | 90 | 98 |
| 5.11 | 15,8 | 13,1 | 74 | 95 |

## Patentansprüche

1. Thermoplastische teilchenförmige Pfropfpolymerisate mit Teilchen aus einem Kern (A) aus organischem harzartigem Polymerisat aus olefinisch ungesättigten Monomeren mit Erweichungstemperaturen (Glastemperaturen) über 30°C, einem Hüllenpolymerisat (B) aus Organopolysiloxan und einem auf die aus A und B bestehenden Teilchen gepfropftem Polymerisat (C) aus wenigstens einem α,β-ungesättigten olefinischen Monomeren.

2. Verwendung der teilchenförmigen Pfropfpolymerisate gemäß Anspruch 1, gegebenenfalls in Mischung mit spröden, thermoplastischen Harzen, als thermoplastische Formmasse.

## Claims

1. Thermoplastic particulate graft polymers comprising particles of a core (A) of an organic resin-like polymer of olefinically unsaturated monomers having softening temperatures (glass temperatures) above 30°C, a shell polymer (B) of organopolysiloxane and a polymer (C) of at least one α,β-unsaturated

olefinic monomer grafted onto the particles consisting of A and B.

2. The use of the particulate graft polymers claimed in claim 1, optionally in admixture with brittle, thermo-plastic resins, as thermoplastic molding compositions.

**Revendications**

1. Polymères greffés thermoplastiques en particules consistant en un noyau (A) d'un polymère résineux organique de monomères à insaturation oléfinique, ayant une température de ramolissement (température de transition du second ordre) supérieure à 30°C, un polymère d'enveloppe (B) consistant en un organopolysiloxanne et un polymère greffé (C) sur les particules consistant en (A) et (B), d'au moins un monomère à insaturation α,β-oléfinique.

2. Utilisation des polymères greffés en particules de la revendication 1, éventuellement en mélange avec des résines thermoplastiques rigides, en tant que matières à mouler thermoplastiques.